# EUROPEAN PATENT APPLICATION

(11) **EP 4 817 934 A1**
(43) Date of publication of application: **07.10.2026**
(21) Application number: 26164016.3
(22) Date of filing: 11.03.2026
(51) Int. Cl.: B60L 15/20, B60K 1/04, B60K 11/02, B60L 50/64, B60L 58/26, B60W 30/18, H01M 10/613, H02J 7/00

(54) **ELECTRIFIED VEHICLE**

(30) Priority: 03.04.2025 JP 2025061931
(71) Applicant: Toyota Jidosha Kabushiki Kaisha, Toyota-shi, Aichi-ken 471-8571 (JP)
(72) Inventor: SUZUKI, Tatsuaki, Toyota-shi, 471-8571 (JP)
(74) Representative: J A Kemp LLP

(57) **Abstract**

A vehicle can travel by using electric power, and includes a battery including a single cell that can store electric power for traveling and a power-conducting component through which a current flows outside the single cell, an MG, a cooling and temperature-raising device that cools the power-conducting component, and a CPU of an ECU. The CPU controls, in a case where there is a request to operate the MG at a predetermined output or higher, the cooling and temperature-raising device to cool the power-conducting component at least during a period from when the request is received to when the predetermined output or higher is generated. As a result, the power-conducting component of the battery is cooled in advance before being heated during the period from when the request to operate the MG at the predetermined output or higher is received to when the predetermined output or higher is generated.

## Description

### BACKGROUND OF THE INVENTION

### 1. Field of the Invention

The present disclosure relates to an electrified vehicle, and particularly, to an electrified vehicle that can travel by using electric power.

### 2. Description of Related Art

In the related art, there has been a technique of causing a vehicle to start quickly via launch control that is control of causing the vehicle to start quickly (for example, see Japanese Unexamined Patent Application Publication No. 2021-55842 (JP 2021-55842 A)).

### SUMMARY OF THE INVENTION

In an electrified vehicle such as a battery electric vehicle (BEV), a hybrid electric vehicle (HEV), a plug-in hybrid electric vehicle (PHEV), or a fuel cell electric vehicle (FCEV), in a case of high-power discharge from a battery, such as in a case of quick start, an electrified component around the battery becomes high in temperature. In a case where the electrified component becomes high in temperature, since electrical resistance increases, it is difficult to increase the output of the battery. Therefore, acceleration performance of the vehicle deteriorates.

The present disclosure has been made to solve the above-described problem, and an object thereof is to provide an electrified vehicle in which electrical resistance of a power-conducting component does not increase, an output of a battery can be increased, and deterioration in acceleration performance can be reduced.

An electric vehicle according to the present disclosure is a vehicle configured to travel by using electric power, the electrified vehicle includes: a battery including a battery cell configured to store electric power for traveling and a power-conducting component through which a current flows outside the battery cell; a motor generator configured to generate a drive force by using the electric power of the battery; a cooling unit configured to cool the power-conducting component; and a processor. The processor is configured to control, in a case where there is a request to operate the motor generator at a predetermined output or higher, the cooling unit such that the cooling unit cools the power-conducting component at least during a period from when the request is received to when the predetermined output or higher is generated.

According to such a configuration, the power-conducting component of the battery is cooled in advance before being heated during a period from when the request to operate the motor generator at the predetermined output or higher is received to when the predetermined output or higher is generated. As a result, it is possible to provide an electrified vehicle in which electrical resistance of the power-conducting component does not increase, the output of the battery can be increased, and deterioration in acceleration performance can be reduced.

The cooling unit may cool the power-conducting component more strongly than the battery cell. According to such a configuration, since the power-conducting component is cooled more strongly than the battery cell, it is possible to suppress the electrical resistance of the power-conducting component from further increasing. In addition, it is possible to reduce an increase in internal resistance of the battery cell due to the battery cell being cooled more than needed.

A sensor configured to measure a temperature of the battery may further be included, and the cooling unit may include a cooling device configured to cool a refrigerant. The processor may calculate a cooling heat amount of the power-conducting component from the temperature measured by the sensor and a temperature of the refrigerant, and control the cooling device such that the power-conducting component is cooled by the cooling heat amount.

According to such a configuration, the power-conducting component can be appropriately cooled by the refrigerant cooled by the cooling device.

The cooling unit may be also used to cool the battery cell, and may reduce a temperature of the power-conducting component by a greater amount than a temperature of the battery cell.

According to such a configuration, since the power-conducting component is cooled more strongly than the battery cell, it is possible to suppress the electrical resistance of the power-conducting component from further increasing. In addition, it is possible to reduce an increase in internal resistance of the battery cell due to the battery cell being cooled more than needed.

According to the present disclosure, it is possible to provide an electrified vehicle in which electrical resistance of a power-conducting component does not increase, an output of a battery can be increased, and deterioration in acceleration performance can be reduced.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic configuration diagram of a vehicle according to the present embodiment;
FIG. 2 is a diagram illustrating an example of a cooling and temperature-raising device of the present embodiment;
FIG. 3 is a schematic diagram showing a structure of a battery for describing cooling of a battery of a first embodiment;
FIG. 4 is a graph for describing cooling of a power-conducting component of the battery in launch control of the present embodiment;
FIG. 5 is a first schematic diagram showing a structure of a battery for describing cooling of the battery of a second embodiment; and
FIG. 6 is a second schematic diagram showing the structure of the battery for describing the cooling of the battery of the second embodiment.

### DETAILED DESCRIPTION OF EMBODIMENTS

In the following description, an embodiment of the present disclosure will be described in detail with reference to the drawings. It should be noted that, in the figures, the same or corresponding parts are designated by the same reference signs and the description thereof will not be repeated.

### First Embodiment

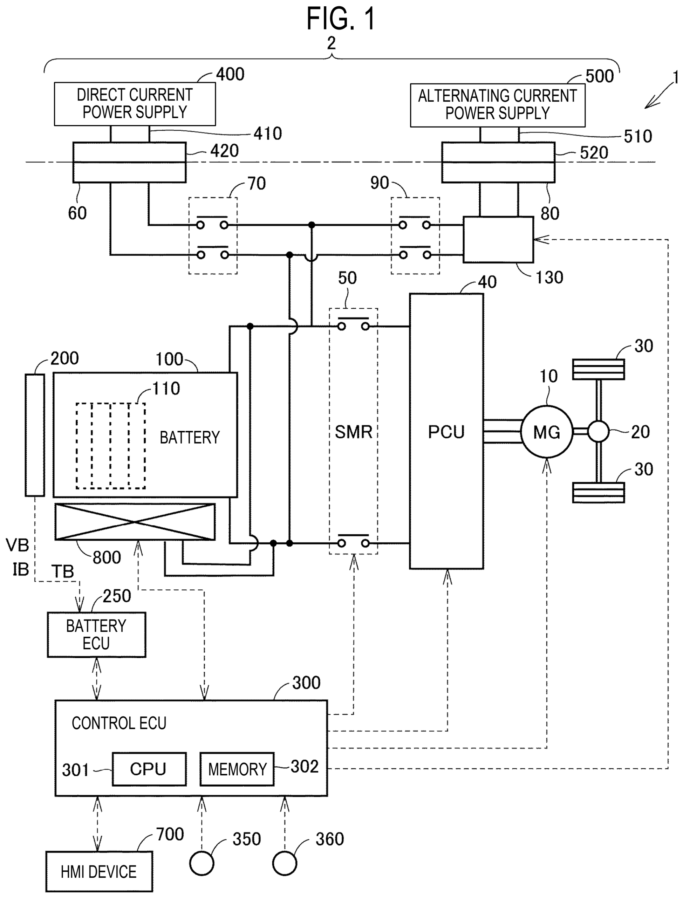

FIG. 1 is a schematic configuration diagram of a vehicle 1 according to the present embodiment. In the present embodiment, the vehicle 1 is an electrified vehicle, and is, for example, a BEV. The vehicle 1 includes a motor generator (MG) 10, a power transmission gear 20, drive wheels 30, a power control unit (PCU) 40, a system main relay (SMR) 50, a battery 100, a monitoring unit 200, a battery electronic control unit (ECU) 250, and a control ECU 300.

The MG 10 has a function as an electric motor and a function as a generator. Output torque of the MG 10 is transmitted to the drive wheels 30 via the power transmission gear 20 including a speed reducer, a differential gear, and the like.

In a case of braking the vehicle 1, the MG 10 is driven by the drive wheels 30, and the MG 10 operates as a generator. Regenerative power generated by a regenerative braking force in the MG 10 is stored in the battery 100.

The PCU 40 is an electric power conversion device that bidirectionally converts electric power between the MG 10 and the battery 100. The PCU 40 includes, for example, an inverter and a converter that operate based on a control signal from the control ECU 300, and drives the MG 10.

The SMR 50 is electrically connected to an electric power line connecting the battery 100 and the PCU 40. In a case where the SMR 50 is turned on in response to the control signal from the control ECU 300 and is in a conduction state, electric power can be exchanged between the battery 100 and the PCU 40. On the other hand, in a case where the SMR 50 is turned off and is in a cutoff state, the electrical connection between the battery 100 and the PCU 40 is cut off.

The battery 100 stores electric power for driving the MG 10. The battery 100 is a secondary battery and is a battery pack including a plurality of single cells (battery cells) 110. The single cell includes, for example, a lithium-ion battery, and may be a nickel hydrogen battery or an all-solid state battery.

The monitoring unit 200 includes a voltage measurement unit, a current sensor, and a temperature measurement unit. The voltage measurement unit measures a voltage VB of the battery. The current sensor measures a current IB input to and output from the battery 100. The temperature measurement unit measures a temperature TB of the battery 100. The voltage VB, the temperature TB, and the current IB are input to the battery ECU 250. The battery ECU 250 calculates a state of charge (SOC) of the battery 100. The SOC may be calculated, for example, by a coulomb counting method, an SOC-open circuit voltage (OCV) characteristic, or a combination thereof. The voltage VB, the temperature TB, the current IB, and the SOC are output from the battery ECU 250 to the control ECU 300.

The vehicle 1 includes a direct current inlet 60 and an alternating current inlet 80, and is capable of charging the battery 100 from an electric vehicle supply equipment (EVSE) 2 such as an external direct current power supply 400 or an external alternating current power supply 500 (external charging). In a case where a connector 420 provided at a distal end of a charging cable 410 of the external direct current power supply (EVSE) 400 is connected to the direct current inlet 60, a charging relay 70 is controlled to be in a connected state, and the external charging (fast charging) of the battery 100 is executed.

In a case where a connector 520 provided at a distal end of a charging cable 510 of the external alternating current power supply (EVSE) 500 is connected to the alternating current inlet 80, an in-vehicle charger 130 converts alternating current electric power supplied from the external alternating current power supply into direct current electric power. The direct current electric power output from the in-vehicle charger 130 is supplied to the battery 100 via a charging relay 90, and the external charging (normal charging) of the battery 100 is executed.

The control ECU 300 includes a central processing unit (CPU) 301 and a memory 302. The control ECU 300 controls each device such that the vehicle 1 is in a desired state based on a signal received from the battery ECU 250, a signal from various sensors (not shown) (for example, an accelerator opening signal and a vehicle speed signal), and information such as a map and a program stored in the memory 302. The control ECU 300 controls a cooling and temperature-raising device 800. The battery ECU 250 also includes a CPU and a memory, as in the control ECU 300.

The vehicle 1 further includes a power switch (ignition switch) 350. The power switch 350 is operated by a user. For example, in a case where the user operates the power switch 350 while a brake pedal is depressed, the control ECU 300 controls the SMR 50 to be turned on (in a conduction state). In a case where the SMR 50 is turned on, the MG 10 can be driven by the PCU 40 (a drive system is started), and the vehicle 1 can travel. In a case where the user operates the power switch 350 in a state where the vehicle 1 can travel, the SMR 50 is turned off (cutoff state), the PCU 40 and the like (drive system) are stopped, and the vehicle 1 is in a stop state.

A human machine interface (HMI) device 700 includes an input device and a display device. The input device and the display device may be a touch panel display.

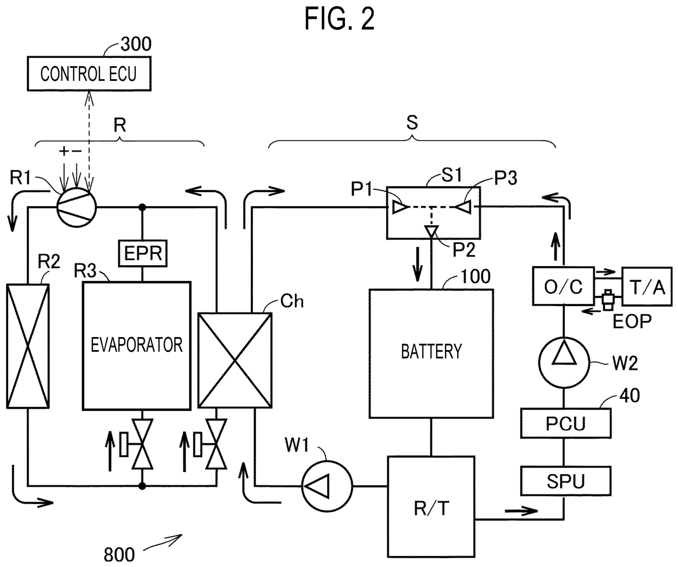

The vehicle 1 further includes the cooling and temperature-raising device 800. The cooling and temperature-raising device 800 cools the battery 100. FIG. 2 is a diagram illustrating an example of the cooling and temperature-raising device 800 of the present embodiment. In the present embodiment, the cooling and temperature-raising device 800 includes a thermal management circuit that can cool and heat the battery 100. The cooling and temperature-raising device 800 (thermal management circuit) includes a thermal circuit S and a refrigeration cycle R.

In the refrigeration cycle R, a refrigerant circulates. The refrigeration cycle R includes a compressor R1 and a condenser R2. The compressor R1 compresses the refrigerant by using a motor that can control a rotation speed at which the motor operates with electric power from the battery 100 in response to a control signal from the control ECU 300. A power consumption of the compressor R1 is substantially proportional to a flow rate of the refrigerant discharged from the compressor R1, that is, a rotation speed of the motor that drives the compressor R1. The refrigerant compressed by the compressor R1 flows into the condenser R2. The high-pressure refrigerant discharged from the condenser R2 flows into an evaporator R3 via an electric expansion valve and flows into a chiller Ch via an electric expansion valve. The evaporator R3 is used as a cooling source of an air conditioning device of the vehicle 1. The chiller Ch performs heat exchange with a heat medium circulating in the thermal circuit S to cool the heat medium.

In the thermal circuit S, the heat medium circulates. The thermal circuit S includes a three-way valve S1, the battery 100, a reserve tank (R/T), a smart power unit (SPU), the PCU 40, an oil cooler (O/C), and pumps W1, W2. The oil cooler cools oil that cools a transaxle (T/A) with the heat medium of the thermal circuit S. An EOP circulates the oil that cools the transaxle. The pump W1 operates and a port P1 and a port P2 of the three-way valve S1 are connected, the heat medium cooled by the chiller Ch circulates through the battery 100, whereby the battery 100 is cooled. The pump W2 operates and a port P2 and a port P3 of the three-way valve S1 are connected, the heat medium heated by waste heat of the SPU, the PCU 40, and the O/C circulates through the battery 100, whereby the battery 100 is heated. An electric heater may be provided between the port P2 and the battery 100.

The heat medium circulating in the thermal circuit S may be, for example, insulating oil or an insulating antifreeze. The refrigeration cycle R and the thermal circuit S (compressor R1, pumps W1, W2, and the like) are driven by the electric power stored in the battery 100.

In the vehicle 1, it is considered that the vehicle 1 is caused to start quickly by launch control that is control of causing the vehicle 1 to start quickly. In an electrified vehicle such as a BEV, an HEV, a PHEV, or an FCEV (in the present embodiment, the vehicle 1 that is a BEV), in a case of high-power discharge from the battery 100, such as in a case of quick start, a temperature of an electrified component around the battery 100 becomes high. In a case where the temperature of the electrified component becomes high, since electrical resistance increases, it is difficult to increase an output of the battery 100. Therefore, acceleration performance of the vehicle 1 deteriorates.

Therefore, in a case where there is a request to operate the MG 10 at a predetermined output or higher, the CPU 301 of the control ECU 300 controls the cooling and temperature-raising device 800 that cools a power-conducting component through which the current flows outside the single cell 110 of the battery 100 to cool the power-conducting component at least during a period from when the request is received to when the predetermined output or higher is generated.

As a result, the power-conducting component of the battery 100 is cooled in advance before being heated during the period from when the request to operate the MG 10 at the predetermined output or higher is received to when the predetermined output or higher is generated. As a result, the electrical resistance of the power-conducting component does not increase, the output of the battery 100 can be increased, and the deterioration in the acceleration performance can be reduced.

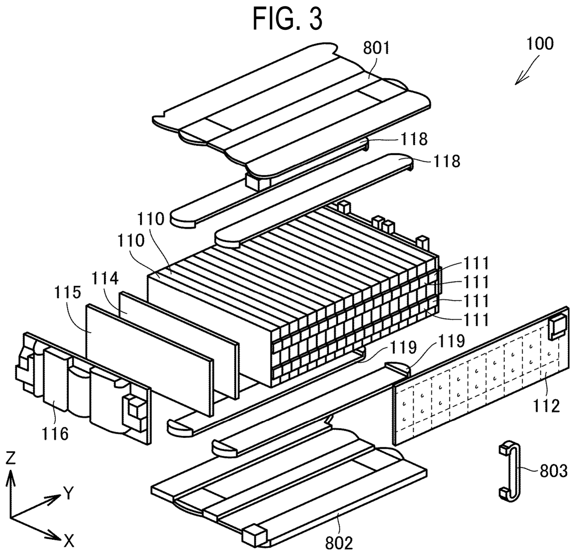

FIG. 3 is a schematic diagram showing a structure of the battery 100 for describing the cooling of the battery 100 of a first embodiment. According to FIG. 3, the single cell 110 includes a terminal 111. The battery 100 includes a bus bar module 112, a heat insulating material 114, an insulating resin 115, an end plate 116, an upper surface restraint band 118, a lower surface restraint band 119, an upper surface cooler 801, a lower surface cooler 802, and a delivery pipe 803, in addition to the single cell 110.

The bus bar module 112 is a module in which bus bars are combined to connect the terminals 111 such that the single cells 110 are connected in series. The bus bar connects the plus and minus terminals 111 of two adjacent single cells 110. The heat insulating material 114 is a member that thermally insulates between the single cell 110 and the end plate 116. The insulating resin 115 is a member that electrically insulates between the single cell 110 and the end plate 116. The end plate 116, the upper surface restraint band 118, and the lower surface restraint band 119 restrain the single cells 110 in a laminated state.

The upper surface cooler 801 and the lower surface cooler 802 are connected to the port P2 of the three-way valve S1 shown in FIG. 2 via the delivery pipe 803. The heat medium cooled by the chiller Ch circulates inside the upper surface cooler 801 and the lower surface cooler 802 through the delivery pipe 803. As a result, a body of the single cell 110, the terminal 111, and the bus bar module 112 are cooled. The terminal 111 and the bus bar module 112 are the power-conducting components of the battery 100. The power-conducting components of the battery 100, such as the terminal 111 and the bus bar module 112, are made of metal such as copper. Therefore, thermal conductivity is higher than thermal conductivity of the body of the single cell 110. As a result, the power-conducting components of the battery 100 are cooled more strongly by the upper surface cooler 801 and the lower surface cooler 802 than the body of the single cell 110 or the like that is a component other than the power-conducting components.

Returning to FIG. 1, the vehicle 1 further includes a launch switch 360 for starting a launch mode for executing the launch control. The launch switch 360 is operated by the user. In a case where the launch switch 360 is operated in a case where the launch mode is in an off state, the launch mode is set to an on state, and in a case where the launch switch 360 is operated in a case where the launch mode is in the on state, the launch mode is set to the off state.

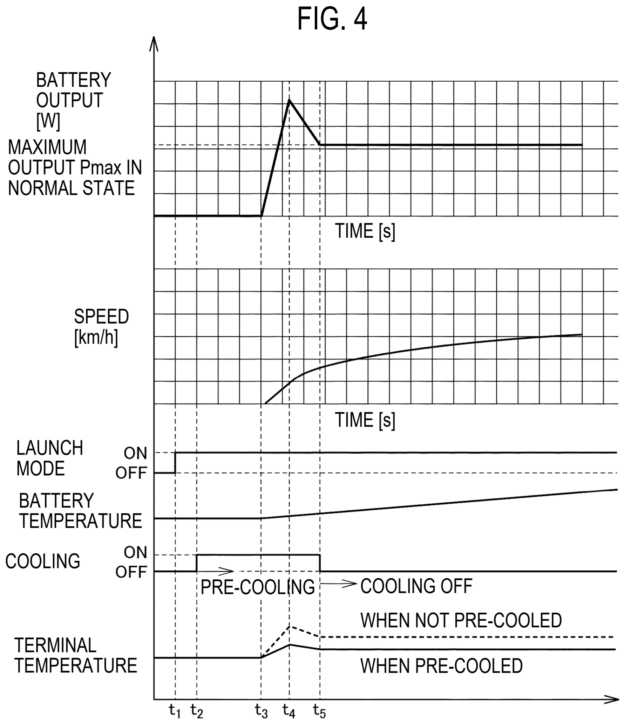

FIG. 4 is a graph for describing the cooling of the power-conducting component of the battery 100 in the launch control of the present embodiment. According to FIG. 4, at time t1, the CPU 301 of the control ECU 300 sets the launch mode to the on state by the launch switch 360 being operated.

The CPU 301 starts pre-cooling of the power-conducting component at time t2 after setting the launch mode to the on state. In the pre-cooling, the cooling and temperature-raising device 800 is controlled such that the power-conducting component is cooled strongly, and for example, a rotation speed of the compressor R1 of the refrigeration cycle R is increased or a discharge amount of the pump W1 of the thermal circuit S is increased. In addition, the CPU 301 calculates a minimum needed cooling heat amount in which the body of the single cell 110 is not cooled to a temperature at which internal resistance of the single cell 110 increases to a predetermined value or higher from the temperature of the battery 100 and the temperature of the heat medium, and controls the cooling and temperature-raising device 800 such that the battery 100 is cooled by the cooling heat amount. The predetermined value that is a threshold value of the internal resistance is a value that is a criterion for determining that efficiency of the single cell is poor in a case where the internal resistance of the single cell 110 is the predetermined value or higher.

In a case where an accelerator pedal is operated by the user at time t3, the CPU 301 controls the PCU 40 such that the MG 10 starts rapid acceleration. In response to this, the battery output of the single cell 110 rapidly increases, and a vehicle speed rapidly accelerates. As a result, since a large current flows through the power-conducting component, a temperature of the terminal 111 that is one of the power-conducting components (terminal temperature) increases. In addition, a temperature of a body of the battery 100 (battery temperature) also starts to increase. In a case where the power-conducting component is pre-cooled, the increase in the temperature of the terminal 111 can be reduced as compared to a case where the power-conducting component is not pre-cooled.

In a case where the increase in the battery output is completed and the battery output decreases at time t4, the temperature of the terminal 111 also decreases. The CPU 301 continues the pre-cooling while a predetermined condition related to the battery output is satisfied. The predetermined condition is, for example, a condition that the current period is at least a period from when the request to set the launch mode to the on state is made to when an output equal to or higher than a rated maximum output Pmax in a normal state in which the launch mode is not in the on state is generated, and is, for example, a condition that the current period is at least a period from when the request to set the launch mode to the on state is made to when the output that exceeds the maximum output Pmax in the normal state is generated and returns to the maximum output Pmax in the normal state, as shown in FIG. 4.

However, the predetermined condition is not limited to this, and may be a condition that the current period is a period from when the request to set the launch mode to the on state is made to when the output that exceeds the maximum output Pmax in the normal state is generated and becomes an output equal to or less than the predetermined output less than the maximum output Pmax in the normal state. The predetermined condition may be a condition that the current period is a period from when the request to set the launch mode to the on state is made to when the accelerator pedal is not operated or an operation amount of the accelerator pedal is equal to or less than a predetermined amount (for example, 50%). The predetermined condition may be a condition that the current period is a period from when the request to set the launch mode to the on state is made to when the brake pedal is operated. The predetermined condition may be a condition that the current period is a period from when the request to set the launch mode to the on state is made to when the request to set the launch mode to the off state is made. The predetermined condition may be a condition that any one of any plurality of conditions among the conditions is satisfied.

In a case where the predetermined condition related to the battery output is not satisfied at time t5, the CPU 301 ends the pre-cooling of the power-conducting component. By ending the pre-cooling, the strong cooling of the power-conducting component is ended, but the cooling of the body of the single cell 110 or the like that is a component other than the power-conducting component is continued as needed.

### Second Embodiment

In the first embodiment, as shown in FIG. 3, the power-conducting component such as the terminal 111 of the single cell 110 is cooled by the same component as the component (the upper surface cooler 801 and the lower surface cooler 802) that cools the body of the single cell 110 or the like that is a component other than the power-conducting component. In a second embodiment, the power-conducting component such as a terminal 111A of a single cell 110A is cooled by a component (for example, a component dedicated to cooling the power-conducting component) different from the component that cools the power-conducting component.

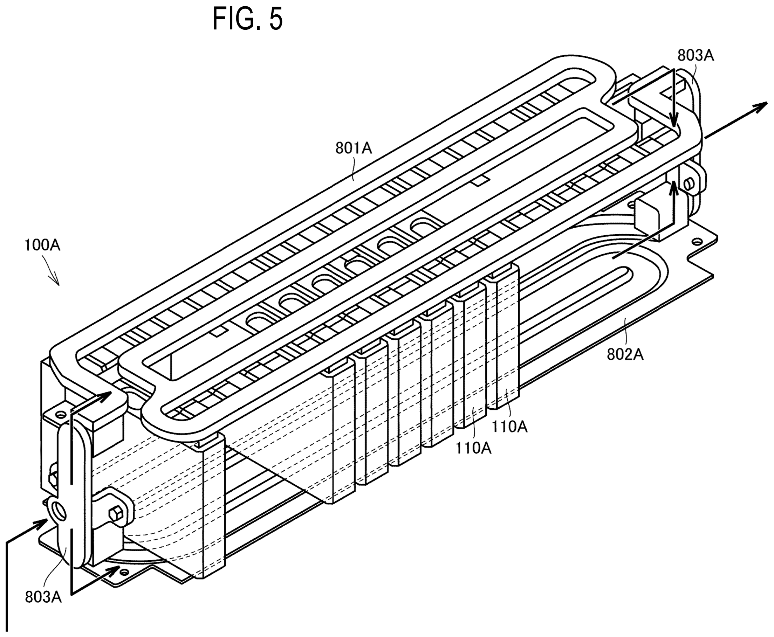

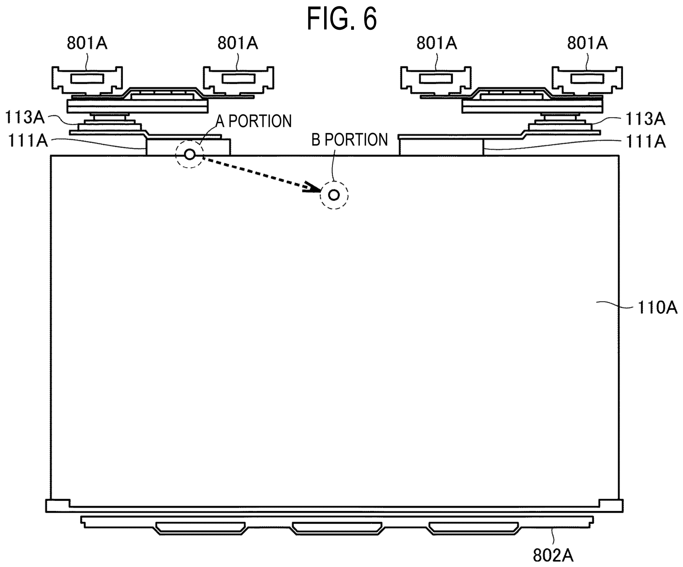

FIG. 5 is a first schematic diagram showing a structure of a battery 100A for describing cooling of the battery 100A of the second embodiment. FIG. 6 is a second schematic diagram showing the structure of the battery 100A for describing the cooling of the battery 100A of the second embodiment. In FIGS. 5 and 6, FIG. 6 shows a cross section perpendicular to a lamination direction of the single cells 110A shown in FIG. 5.

The battery 100A of the second embodiment includes an upper surface cooler 801A, a lower surface cooler 802A, and a delivery pipe 803A, in addition to the single cell 110A. The upper surface cooler 801A and the lower surface cooler 802A are connected to the port P2 of the three-way valve S1 shown in FIG. 2 via the delivery pipe 803A. The heat medium cooled by the chiller Ch circulates inside the upper surface cooler 801A and the lower surface cooler 802A through the delivery pipe 803A. As a result, the body of the single cell 110A, the terminal 111A, and the bus bar 113A are cooled. The bus bar 113A connects the plus and minus terminals 111A of two adjacent single cells 110A. The terminal 111A and the bus bar 113A are power-conducting components of the battery 100A. The power-conducting components of the battery 100A, such as the terminal 111A and the bus bar 113A, are made of metal such as copper. Therefore, thermal conductivity is higher than thermal conductivity of the body of the single cell 110A. As a result, the power-conducting components of the battery 100A are cooled more strongly by the upper surface cooler 801A and the lower surface cooler 802A than the body of the single cell 110A or the like that is a component other than the power-conducting components.

Further, in the second embodiment, the upper surface cooler 801A has a shape suited for cooling the power-conducting components of the battery, such as the terminal 111A and the bus bar 113A, and is substantially dedicated to cooling the power-conducting components. As a result, the power-conducting components of the battery 100A, such as the terminal 111A and the bus bar 113A, are cooled more strongly than the body of the single cell 110A or the like that is a component other than the power-conducting components. In a case where the upper surface cooler 801A is not provided, a maximum-temperature portion of the single cell 110A is around an A portion. On the other hand, in a case where the upper surface cooler 801A is provided, the maximum-temperature portion of the single cell 110A is around a B portion, and the power-conducting components such as the terminal 111A are cooled more strongly.

### Modification

(1) In the above-described embodiment, by adopting the structures shown in FIGS. 3, 5, and 6, the power-conducting components such as the terminals 111, 111A, the bus bar module 112, and the bus bar 113A are cooled more strongly than the components other than the power-conducting components. However, the structure is not limited to this, and other structures may be adopted as long as the power-conducting components are cooled more strongly than the components other than the power-conducting components.
(2) The above-described embodiment can be regarded as the disclosure of an electrified vehicle such as the vehicle 1. The above-described embodiment can be regarded as the disclosure of a battery system including the battery 100, the cooling and temperature-raising device 800, and peripheral devices thereof. The above-described embodiment can be regarded as the disclosure of a control method or a control program executed by the electrified vehicle or the battery system.

### Summary

(1) As shown in FIGS. 1 to 6, the vehicle 1 can travel by using electric power, and includes the battery 100 including the single cell 110 that can store electric power for traveling and the power-conducting components (for example, the terminals 111, 111A, the bus bar module 112, and the bus bar 113A) through which the current flows outside the single cell 110, the MG 10 that generates a drive force by using the electric power of the battery 100, the cooling and temperature-raising device 800 that cools the power-conducting component, and the CPU 301 of the control ECU 300. As shown in FIG. 4, in a case where there is the request to operate the MG 10 at the predetermined output (for example, the maximum output Pmax in the normal state) or higher, the CPU 301 controls the cooling and temperature-raising device 800 to cool the power-conducting component at least during the period from when the request is received to when the predetermined output or higher is generated.

As a result, the power-conducting component of the battery 100 is cooled in advance before being heated during the period from when the request to operate the MG 10 at the predetermined output or higher is received to when the predetermined output or higher is generated. As a result, the electrical resistance of the power-conducting component does not increase, the output of the battery 100 can be increased, and the deterioration in the acceleration performance can be reduced. In addition, it is possible to reduce a failure caused by heating of the power-conducting component. It is possible to avoid output limitation on the MG 10 for reducing the failure.

(2) As shown in FIGS. 3, 5, and 6, the upper surface cooler 801, 801A and the lower surface cooler 802 of the cooling and temperature-raising device 800 may cool the power-conducting component more strongly than the body of the single cell 110 or the like that is a component other than the power-conducting component. As a result, since the power-conducting component is cooled more strongly than the component other than the power-conducting component, it is possible to further reduce the increase in the electrical resistance of the power-conducting component. In addition, it is possible to reduce the increase in the internal resistance of the single cell 110 due to the single cell 110 being cooled more than needed.

(3) As shown in FIGS. 1 and 2, the vehicle 1 may further include a sensor (for example, a temperature measurement unit of the monitoring unit) that measures the temperature of the battery 100, and the cooling and temperature-raising device 800 may include a cooling device (for example, the chiller Ch or the refrigeration cycle R) that cools a refrigerant (for example, the heat medium). As shown in FIG. 4, the CPU 301 of the control ECU 300 may calculate the cooling heat amount of the power-conducting component from the temperature measured by the sensor and the temperature of the refrigerant, and control the cooling device such that the power-conducting component is cooled by the cooling heat amount.

As a result, the power-conducting component can be appropriately cooled by the refrigerant cooled by the cooling device.

(4) As shown in FIG. 3, the upper surface cooler 801 and the lower surface cooler 802 of the cooling and temperature-raising device 800 may be also used to cool the single cell 110 and reduce the temperature of the power-conducting component by a greater amount than the temperature of the single cell 110.

As a result, since the power-conducting component is cooled more strongly than the single cell 110, it is possible to further reduce the increase in the electrical resistance of the power-conducting component. In addition, it is possible to reduce the increase in the internal resistance of the single cell 110 due to the single cell 110 being cooled more than needed.

The embodiment disclosed here should be considered to be exemplary examples and not to be restrictive in all respects. The scope of the present disclosure is shown by the scope of claims rather than the description of the embodiment described above, and is intended to include all changes within the meaning and scope equivalent to the scope of claims.

## Claims

1. An electrified vehicle configured to travel by using electric power, the electrified vehicle comprising:
a battery including a battery cell configured to store electric power for traveling and a power-conducting component through which a current flows outside the battery cell;
a motor generator configured to generate a drive force by using the electric power of the battery;
a cooling unit configured to cool the power-conducting component; and
a processor,
wherein the processor is configured to control, in a case where there is a request to operate the motor generator at a predetermined output or higher, the cooling unit such that the cooling unit cools the power-conducting component at least during a period from when the request is received to when the predetermined output or higher is generated.

2. The electrified vehicle according to claim 1, wherein the cooling unit is configured to cool the power-conducting component more strongly than the battery cell.

3. The electrified vehicle according to claim 1, further comprising a sensor configured to measure a temperature of the battery, wherein:
the cooling unit includes a cooling device configured to cool a refrigerant; and
the processor is configured to
calculate a cooling heat amount of the power-conducting component from the temperature measured by the sensor and a temperature of the refrigerant, and
control the cooling device such that the power-conducting component is cooled by the cooling heat amount.

4. The electrified vehicle according to any one of claims 1 to 3, wherein the cooling unit is also used to cool the battery cell, and is configured to reduce a temperature of the power-conducting component by a greater amount than a temperature of the battery cell.
